# EUROPEAN PATENT APPLICATION

(11) **EP 4 618 629 A1**
(43) Date of publication of application: **17.09.2025**
(21) Application number: 22964857.1
(22) Date of filing: 11.11.2022
(51) Int. Cl.: H04W 52/00, H04W 52/02

(54) **NETWORK DEVICE WAKEUP METHOD AND APPARATUS, DEVICE, AND STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2022/131432
(87) International publication number: WO 2024/098389

(57) **Abstract**

The present disclosure provides a network device wakeup method and apparatus, a device, and a storage medium, which are applied to the technical field of wireless communication. The method comprises: sending wakeup information to a first network device which is in an energy-saving state, the wakeup information being used for instructing the first network device to end the energy-saving state and start an operating state.

## Description

### TECHNICAL FIELD

The present disclosure relates to the field of wireless communication technologies and, in particular, to a network device wake-up method and apparatus, a device, and a storage medium.

### BACKGROUND

With development of wireless communication technologies and capacity-expanding of wireless networks, how to reduce energy consumption of network devices is a topic that has always been in need of research.

One way to reduce the energy consumption of a base station is to reduce unnecessary downlink transmissions of the base station. One way to reduce the unnecessary downlink transmissions is to make the base station be in a dormant state.

It is required to research how a user device knows that the base station is in the dormant state and how the user device wakes up the base station.

### SUMMARY

The present disclosure provides a network device wake-up method and apparatus, a device, and a storage medium.

In a first aspect, the present disclosure provides a network device wake-up method that is performed by a user device and includes:
sending wake-up information to a first network device in an energy-saving state, where the wake-up information indicates the first network device to terminate the energy-saving state and start a working state.

In some possible embodiments, the energy-saving state is an energy-saving state of restricting a downlink transmission, and the working state is a state of not restricting the downlink transmission.

In some possible embodiments, the restricting the downlink transmission at least includes not sending at least one of: common downlink control information, a system message and a paging message.

In some possible embodiments, the method further includes receiving first information sent by the first network device, where the first information indicates that the first network device is in the energy-saving state.

In some possible embodiments, the first information is a synchronization signal block (SSB), and a physical broadcast channel (PBCH) in the SSB includes an information field, the information field includes at least one bit, and the information field indicates that the first network device does not send common downlink control information, a system message and a paging message.

In some possible embodiments, the information field is in a reservation information field in the PBCH; and the reservation information field is a reservation information field in a higher layer broadcast channel, or a reservation information field in a physical layer.

In some possible embodiments, a resource configuration of the wake-up information is a physical random access channel (PRACH) configuration predefined by a protocol; and the PRACH configuration includes at least one of: a period, a time domain resource, a preamble sequence, and a preamble sequence format.

In some possible embodiments, a frequency domain position in the PRACH configuration is determined based on a frequency domain position at which the first network device sends an SSB.

In some possible embodiments, a frequency domain position in the PRACH configuration is the same as a frequency domain position at which the first network device sends an SSB.

In some possible embodiments, a set frequency domain interval is present between a frequency domain position in the PRACH configuration and a frequency domain position at which the first network device sends an SSB.

In some possible embodiments, the first information includes a cell identification; and the method further includes: determining, based on the cell identification, a resource configuration of the wake-up information.

In some possible embodiments, determining, based on the cell identification, the resource configuration of the wake-up information includes: determining based on the cell identification, from a plurality of PRACH configurations predefined by a protocol, a PRACH configuration as the resource configuration of the wake-up information.

In some possible embodiments, receiving the first information sent by the first network device includes receiving a primary synchronization signal (PSS) and a secondary synchronization signal (SSS) sent by the first network device.

In some possible embodiments, a frequency domain position of the PSS is the same as a frequency domain position of the SSS, and an interval between a time domain position of the PSS and a time domain position of the SSS is a set interval.

In some possible embodiments, the set interval is one symbol.

In some possible embodiments, a frequency domain position of the first information is on a synchronization raster.

In some possible embodiments, the method further includes determining a second time domain position based on a first time domain position, where the first time domain position is a time domain position at which the first network device sends the first information, and the second time domain position is a time domain position at which the user device sends the wake-up information.

In some possible embodiments, the method further includes determining, based on a frequency domain position at which the first network device sends the first information, a frequency domain position of the wake-up information.

In some possible embodiments, a resource configuration of the wake-up information is configured by a second network device, and the second network device is a service network device of the user device.

In some possible embodiments, sending the wake-up information to the first network device in the energy-saving state includes: measuring a signal quality of the first information, and sending the wake-up information to the first network device when a condition for waking up the first network device in the energy-saving state is determined, based on the signal quality, to be satisfied.

In a second aspect, the present disclosure provides a network device wake-up method that is performed by a first network device and includes:
receiving wake-up information sent by a user device, where the wake-up information indicates the first network device to terminate an energy-saving state and start a working state; and
terminating the energy-saving state, and starting the working state.

In some possible embodiments, the energy-saving state is a state of restricting a downlink transmission, and the working state is a state of not restricting the downlink transmission.

In some possible embodiments, the restricting the downlink transmission includes not sending at least one of: common downlink control information, a system message and a paging message.

In some possible embodiments, the method further includes sending first information, where the first information indicates that the first network device is in the energy-saving state.

In some possible embodiments, the first information is an SSB, and a PBCH in the SSB includes an information field, the information field includes at least one bit, and the information field indicates that the first network device does not send common downlink control information, a system message and a paging message.

In some possible embodiments, a resource configuration of the wake-up information is a PRACH configuration predefined by a protocol; and the PRACH configuration includes at least one of: a period, a time domain resource, a preamble sequence, and a preamble sequence format.

In some possible embodiments, a frequency domain position in the PRACH configuration is determined based on a frequency domain position at which the network device sends an SSB.

In some possible embodiments, a frequency domain position in the PRACH configuration is the same as a frequency domain position at which the first network device sends an SSB.

In some possible embodiments, the first information includes a cell identification; and the method further includes determining, based on the cell identification, a resource configuration of the wake-up information.

In some possible embodiments, determining, based on the cell identification, the resource configuration of the wake-up information includes: determining based on the cell identification, from a plurality of PRACH configurations predefined by a protocol, a PRACH configuration as the resource configuration of the wake-up information.

In some possible embodiments, sending the first information includes sending a PSS and an SSS.

In some possible embodiments, a frequency domain position of the PSS is the same as a frequency domain position of the SSS, and an interval between a time domain position of the PSS and a time domain position of the SSS is a set interval.

In some possible embodiments, a frequency domain position of the first information is on a synchronization raster.

In some possible embodiments, the method further includes determining a second time domain position based on a first time domain position, where the first time domain position is a time domain position at which the first network device sends the first information, and the second time domain position is a time domain position at which the user device sends the wake-up information.

In some possible embodiments, the method further includes determining, based on a frequency domain position at which the network device sends the first information, a frequency domain position of the wake-up information.

In a third aspect, there is provided a network device wake-up apparatus that is configured as a user device and includes:
a transceiving module, configured to send wake-up information to a first network device in an energy-saving state, where the wake-up information indicates the first network device to terminate the energy-saving state and start a working state.

In a fourth aspect, there is provided a network device wake-up apparatus that is configured as a network device and includes:
a transceiving module, configured to receive wake-up information sent by a user device, where the wake-up information indicates a first network device to terminate an energy-saving state and start a working state; and
a processing module, configured to terminate the energy-saving state and start the working state.

In a fifth aspect, there is provided an electronic device including a processor and a memory, where
the memory is configured to store a computer program; and
the processor is configured to execute the computer program, thereby implementing the first aspect or any possible design in the first aspect.

In a sixth aspect, there is provided an electronic device including a processor and a memory, where
the memory is configured to store a computer program; and
the processor is configured to execute the computer program, thereby implementing the second aspect or any possible design in the second aspect.

In a seventh aspect, there is provided a computer-readable storage medium. The computer-readable storage medium stores an instruction. The instruction, when invoked and executed on a computer, causes the computer to perform the first aspect or any possible design in the first aspect.

In an eighth aspect, there is provided a computer-readable storage medium. The computer-readable storage medium stores an instruction. The instruction, when invoked and executed on a computer, causes the computer to perform the first aspect or any possible design in the first aspect.

It should be understood that the above general description and the later detailed description are only exemplary and explanatory, and cannot limit the present disclosure.

In the present disclosure, the network device is woken up by means of the user device sending the wake-up information. Thus, the network device is enabled to achieve energy saving during a time period when the energy saving is required, and is enabled to smoothly achieve state switching during a time period when normal working is required.

### BRIEF DESCRIPTION OF THE DRAWINGS

The accompanying drawings illustrated herein are used for providing a further understanding of the embodiments of the present disclosure, and form a part of the present application. The schematic embodiments of the embodiments of the present disclosure and their illustrations are used for explaining the embodiments of the present disclosure, and do not constitute an undue limitation on the embodiments of the present disclosure. In the accompanying drawings:

The accompanying drawings herein are incorporated into the specification and form a part of the specification, illustrate embodiments consistent with the embodiments of the present disclosure, and are used in conjunction with the specification to explain the principles of the embodiments of the present disclosure.
FIG. 1 is a schematic diagram of an architecture of a wireless communication system provided in an embodiment of the present disclosure.
FIG. 2 is a schematic diagram of a network device wake-up method provided in an embodiment of the present disclosure.
FIG. 3 is a schematic diagram of another network device wake-up method provided in an embodiment of the present disclosure.
FIG. 4 is a flowchart of a network device wake-up method provided in an embodiment of the present disclosure.
FIG. 5 is a flowchart of another network device wake-up method provided in an embodiment of the present disclosure.
FIG. 6 is a flowchart of another network device wake-up method provided in an embodiment of the present disclosure.
FIG. 7 is a structural diagram of a network device wake-up apparatus provided in an embodiment of the present disclosure.
FIG. 8 is a structural diagram of another network device wake-up apparatus provided in an embodiment of the present disclosure.
FIG. 9 is a structural diagram of another network device wake-up apparatus provided in an embodiment of the present disclosure.
FIG. 10 is a structural diagram of another network device wake-up apparatus provided in an embodiment of the present disclosure.

### DETAILED DESCRIPTION

The embodiments of the present disclosure are further described in connection with the accompanying drawings and the Detailed Description.

The exemplary embodiments are described in detail here, examples of which are indicated in the accompanying drawings. When the following description involves the accompanying drawings, the same numerals in different accompanying drawings indicate the same or similar elements unless otherwise indicated. The embodiments described in the following exemplary embodiments do not represent all embodiments consistent with the embodiments of the present disclosure. On the contrary, they are only examples of devices and methods consistent with some aspects of the present disclosure as detailed in the appended claims.

The terms used in the embodiments of the present disclosure are used solely for the purpose of describing particular embodiments, and are not intended to limit the embodiments of the present disclosure. The singular forms of "a" and "the" used in the embodiments of the present disclosure and the appended claims are also intended to include the plural form, unless the context clearly indicates other meanings. It should also be understood that the term "and/or" as used in this article refers to and includes any or all possible combinations of one or more of the associated listed items.

It should be understood that although the terms first, second, third, etc. may be used in the embodiments of the present disclosure to describe various types of information, such information should not be limited to these terms. These terms are only used to distinguish the same type of information from one another. For example, without departing from the scope of the embodiments of the present disclosure, the first information may also be referred to as the second information, and similarly, the second information may also be referred to as the first information. Depending on the context, the phrase "if" and "in case" as used herein may be interpreted as "at the time of......", "when ......", or "in response to determining".

The embodiments of the present disclosure are described in detail below, and examples of the embodiments are shown in the accompanying drawings, where the same or similar symbols throughout indicate the same or similar elements. The embodiments described below with reference to the accompanying drawings are exemplary and intended to be used for explaining the present disclosure, and should not be construed as the limitation on the present disclosure.

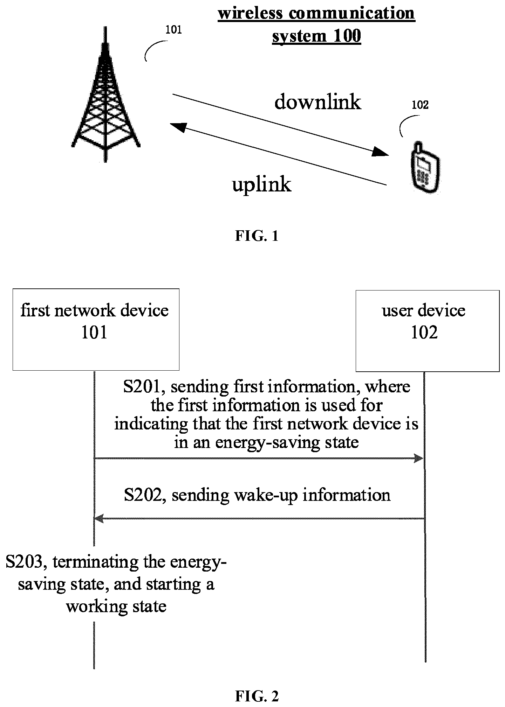

As shown in FIG. 1, a method for sending and monitoring downlink control information provided in the embodiments of the present disclosure may be applied to a wireless communication system 100. The wireless communication system may include a user device 101 and a network device 102. In some embodiments, the user device 101 is configured to support carrier aggregation, and may be connected to a plurality of carrier units of the network device 102, where the plurality of carrier units include a primary carrier unit and one or more secondary carrier units.

It should be understood that the above wireless communication system 100 may be applicable to both low frequency and high frequency scenarios. Application scenarios of the wireless communication system 100 include, but are not limited to, a long term evolution (LTE) system, an LTE frequency division duplex (FDD) system, an LTE time division duplex (TDD) system, a worldwide interoperability for micro wave access (WiMAX) communication system, a cloud radio access network (CRAN) system, a future 5th-generation (5G) system, a new radio (NR) communication system, or a future evolution public land mobile network (PLMN) system, etc.

The user device 101 shown above may be a terminal, an access user device, a user device unit, a user device station, a mobile station (MS), a remote station, a remote user device, a mobile terminal, a wireless communication device, a user device agent, or a user equipment, etc. The user device 101 may have a wireless transceiving function, and is capable of communicating (e.g., wirelessly communicating) with one or more network devices of one or more communication systems, and accepting a network service provided by the network device, where the network device herein includes, but is not limited to, the network device 103 illustrated in the drawing.

In some embodiments, the user device 101 may be a cellular phone, a cordless phone, a session initiation protocol (SIP) phone, a wireless local loop (WLL) station, a personal digital assistant (PDA) device, a handheld device with a wireless communication function, a computing device or other processing device connected to a wireless modem, an in-vehicle device, a wearable device, a user device in a future 5G network, or a user device in a future evolution PLMN network, etc.

The network device 102 may be an access network device (or referred to as an access network site). In some embodiments, the access network device refers to a device providing a network access function, such as a radio access network (RAN) base station. The network device 103 may specifically include a base station (BS), or include a base station and a radio resource management device configured to control the base station, etc. The network device 102 may further include a relay station (a relay device), an access point, and a base station in the future 5G network, a base station in the future evolution PLMN network, or an NR base station, etc. The network device 102 may be a wearable device or an in-vehicle device. The network device 102 may also be a communication chip with a communication module.

For example, the network device 102 includes, but is not limited to, a next-generation base station (gnodeB, gNB) in the 5G, an evolved node B (eNB) in the LTE system, a radio network controller (RNC), a node B (NB) in a wideband code division multiple access (WCDMA) system, a radio controller under the CRAN system, a base station controller (BSC), a base transceiver station (BTS) in a global system for mobile communication (GSM) system or a code division multiple access (CDMA) system, a home base station (for example, a home evolved nodeB, or a home node B (HNB)), a baseband unit (BBU), a transmitting and receiving point (TRP), a transmitting point (TP), or a mobile switching center, etc.

Considering that a base station in a dormant state stops downlink transmissions or only sends a small amount of downlink signals, and at the same time, the base station has an uplink reception function and is capable of receiving a wake-up signal sent by a user device. The user device may send the wake-up signal to the base station in the dormant state. After the base station receives the wake-up signal, the base station terminates the dormant state and resumes the normal downlink sending function to provide communication services for the user device.

The embodiments of the present disclosure provide a network device wake-up method. In this method, the user device sends wake-up information to a first network device in an energy-saving state, where the wake-up information indicates the first network device to terminate the energy-saving state and start a working state. The first network device receives the wake-up information sent by the user device, terminates the energy-saving state, and starts the working state.

In the embodiments of the present disclosure, the network device is woken up by means of the user device sending the wake-up information. Thus, the network device is enabled to achieve energy saving during a time period when the energy saving is required, and is enabled to smoothly achieve state switching during a time period when normal working is required.

The embodiments of the present disclosure provide a network device wake-up method. FIG. 2 is a flowchart of a network device wake-up method illustrated according to an exemplary embodiment. As shown in FIG. 2, the method includes steps S201~S203, and the specifics are as follows.

At S201, a first network device sends first information, where the first information indicates that the first network device is in an energy-saving state.

In some possible embodiments, the first information includes a cell identification and a synchronization signal.

In some possible embodiments, sending the first information by the first network device includes sending second information by the first network device, where the second information includes the first information, the cell identification and the synchronization signal.

In some possible embodiments, the first network device sends the first information through broadcasting.

In some possible embodiments, the first network device sends the first information through periodical broadcasting. In some possible embodiments, the energy-saving state is an energy-saving state of restricting a downlink transmission. In some embodiments, restricting the downlink transmission includes restricting downlink broadcasting. For example, restricting the downlink transmission includes not sending at least two of the following: common downlink control information, a system message and a paging message. As another example, restricting the downlink transmission includes not sending the common downlink control information, the system message and the paging message.

The common downlink control information includes downlink control information (DCI) used for scheduling information such as system information, paging information, random access related information, small data, paging energy-saving information, etc. A search space used for sending the common downlink control information includes Type 0/0A/0B/1/1A/2/2A PDCCH CSS. The network device not sending the common downlink control information includes not configuring the related search space.

At S202, a user device sends wake-up information to the first network device in the energy-saving state, where the wake-up information indicates the first network device to terminate the energy-saving state and start a working state.

In some possible embodiments, the user device sends the wake-up information based on a resource configuration of the wake-up information, i.e., the resource configuration of the wake-up information includes a time frequency resource, and the user device sends the wake-up information on the time frequency resource.

At S203, the first network device terminates the energy-saving state, and starts the working state.

The working state is a state of not restricting the downlink transmission.

In some possible embodiments, restricting the downlink transmission in the energy-saving state includes not sending the common downlink control information, the system message and the paging message. The working state includes sending the common downlink control information, the system message and the paging message.

The embodiments of the present disclosure are applicable to application scenarios of instant wake-up, i.e., the user device sends the wake-up information to the first network device as soon as the user device receives the first information from a certain first network device in the energy-saving state.

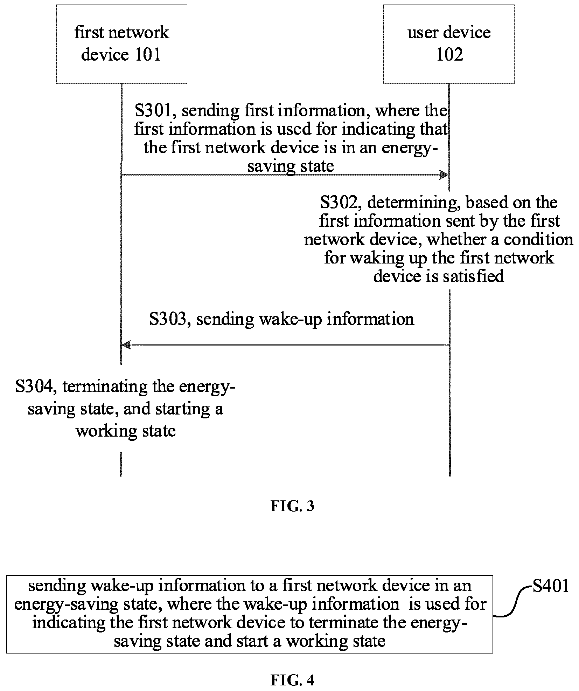

The embodiments of the present disclosure provide a network device wake-up method. FIG. 3 is a flowchart of a network device wake-up method illustrated according to an exemplary embodiment. As shown in FIG. 3, the method includes steps S301~S304, and the specifics are as follows.

At S301, a first network device sends first information, where the first information indicates that the first network device is in an energy-saving state.

In some possible embodiments, the first information includes a cell identification and a synchronization signal.

In some possible embodiments, sending the first information by the first network device includes sending second information by the first network device, where the second information includes the first information, the cell identification and the synchronization signal.

In some possible embodiments, the first network device sends the first information through broadcasting.

In some possible embodiments, the first network device sends the first information through periodical broadcasting.

In some possible embodiments, the energy-saving state is an energy-saving state of restricting a downlink transmission. In some embodiments, restricting the downlink transmission includes restricting downlink broadcasting. For example, restricting the downlink transmission includes not sending one or two of the following: common downlink control information, a system message and a paging message. As another example, restricting the downlink transmission includes not sending the common downlink control information, the system message and the paging message.

The common downlink control information includes downlink control information (DCI) used for scheduling information such as system information, paging information, random access related information, small data, paging energy-saving information, etc. A search space used for sending the common downlink control information includes Type 0/0A/0B/1/1A/2/2A PDCCH CSS. The network device not sending the common downlink control information includes not configuring the related search space.

At S302, the user device measures a signal quality of the first information, and determines, based on the signal quality, whether a condition for waking up the first network device is satisfied. In some possible embodiments, determining, based on the signal quality, whether the condition for waking up the first network device is satisfied includes the following three manners.

In manner I, when the signal quality is greater than a first threshold, it is determined that the condition for waking up the first network device is satisfied.

In manner II, when the signal quality is better than a downlink signal quality of a second network device, it is determined that the condition for waking up the first network device is satisfied.

In manner III, when a difference between the signal quality and the downlink signal quality of the second network device is greater than a second threshold, where the signal quality is better than the downlink signal quality of the second network device, it is determined that the condition for waking up the first network device is satisfied.

At S303, when the user device determines that the condition for waking up the first network device is satisfied, the user device sends the wake-up information to the first network device in the energy-saving state, where the wake-up information indicates the first network device to terminate the energy-saving state and start a working state.

At S304, the first network device terminates the energy-saving state, and starts the working state.

The working state is a state of not restricting the downlink transmission.

In some possible embodiments, restricting the downlink transmission in the energy-saving state includes not sending the common downlink control information, the system message and the paging message. The working state includes sending the common downlink control information, the system message and the paging message.

The embodiments of the present disclosure are applicable to application scenarios of conditional wake-up, i.e., after the user device receives the first information from a certain first network device in the energy-saving state, the user device decides, based on the first information, whether or not to send the wake-up information to the first network device.

The embodiments corresponding to FIGS. 2 and 3 are applicable to heterogeneous networks, and may also be applicable to homogeneous networks. In a heterogeneous network, there are one or more small base stations (small cells), under the wide area coverage of a macro base station (macro cell), used for hotspot enhancement or hotspot coverage; and the user device, after receiving the first information sent by any of the small base stations, may send the wake-up information to the small base station according to the method of the embodiments corresponding to FIG. 2 and FIG. 3. In a homogeneous network, coverage ranges of respective base stations have coverage overlap only in an edge area of the coverage range; and the user device, when moving to a coverage edge area of an adjacent base station, may receive downlink information sent by the adjacent base station simultaneously, and after receiving the first information sent by a base station of one of the adjacent base stations, the user device may send the wake-up information to this base station according to the method of the embodiments corresponding to FIG. 2 and FIG. 3.

In the embodiment corresponding to FIG. 2 and the embodiment corresponding to FIG. 3, the first information may be two different kinds of information, as described specifically below.

In a first case, the first information is a synchronization signal block (SSB).

In the NR, the SSB includes a primary synchronization signal (abbreviated as PSS), a secondary synchronization signal (abbreviated as SSS), and a physical broadcast channel (abbreviated as PBCH). In the case where the energy-saving state of the network device is not sending the common downlink control information, the system message and the paging message, and the first information is an SSB, the PBCH in the SSB includes a set bit. The set bit indicates that the first network device does not send the common downlink control information, the system message and the paging message.

In an example, the first information is an SSB, and the PBCH in the SSB includes an information field. The information field includes at least one bit. The information field indicates that the first network device does not send the common downlink control information, the system message and the paging message.

In some possible embodiments, when the first information is an SSB, the information field in the PBCH in the SSB is in a reservation information field in the PBCH. The reservation information field is a reservation information field in a higher layer broadcast channel, or a reservation information field in a physical layer.

The manner in which the user device determines a resource configuration of the wake-up information includes the following three manners.

### Manner 1

The resource configuration of the wake-up information is a physical random access channel (PRACH) configuration predefined by a protocol. The PRACH configuration includes at least one of the following: a period, a time domain resource, a preamble sequence, and a preamble sequence format.

In an example, a PRACH configuration is predefined by the protocol, the resource configuration of the wake-up information is this PRACH configuration.

In another example, a plurality of PRACH configurations are predefined by the protocol, and the resource configuration of the wake-up information is any one of the plurality of RACH configurations.

In some possible embodiments, a frequency domain position in the PRACH configuration is determined based on a frequency domain position at which the first network device sends an SSB.

For example, the frequency domain position in the PRACH configuration is the same as the frequency domain position at which the first network device sends the SSB.

As another example, a set frequency domain interval is present between the frequency domain position in the PRACH configuration and the frequency domain position at which the first network device sends the SSB.

### Manner 2

The resource configuration of the wake-up information is configured by a second network device, where the second network device is a service network device of the user device. That is, before S201 or S301, the method further includes receiving, by the user device, configuration information sent by the second network device, where the configuration information is the resource configuration of the wake-up information.

### Manner 3

The first information includes a cell identification. The resource configuration of the wake-up information is determined based on the cell identification.

In some possible embodiments, determining, based on the cell identification, the resource configuration of the wake-up information includes: determining based on the cell identification, from a plurality of PRACH configurations predefined by the protocol, a PRACH configuration as the resource configuration of the wake-up information.

In an example, four PRACH configurations are predefined by the protocol, and a PRACH configuration is determined, based on the cell identification and a 4-based modulo operation, from the four PRACH configurations as the resource configuration of the wake-up information.

The following is a second case.

The first information includes only a PSS and an SSS, which may also be understood as that receiving, by the user device, the first information sent by the first network device includes receiving the PSS and the SSS sent by the first network device, where no other downlink broadcast signals except the PSS and SSS are received. Thereby, the user device may be informed that the first network device is in the energy-saving state.

In some possible embodiments, a frequency domain position of the PSS is the same as a frequency domain position of the SSS, and an interval between a time domain position of the PSS and a time domain position of the SSS is a set interval. In an example, the set interval is one symbol. That is, the frequency domain position of the PSS is the same as the frequency domain position of the SSS, and the time domain position of the PSS and the time domain position of the SSS are spaced apart from each other by one symbol.

In some embodiments, when the time domain position of the PSS and the time domain position of the SSS are spaced apart from each other by one symbol, which is the same as the relative position between the time domain position of the PSS and the time domain position of the SSS as specified in the 5G protocol, the user device may multiplex the process of monitoring the SSB to monitoring the first information.

In some possible embodiments, the frequency domain position of the first information is on a synchronization raster. Thereby, the user device may search for the first information by using the process of cell search.

In some possible embodiments, the method further includes determining a second time domain position based on a first time domain position, where the first time domain position is a time domain position at which the first network device sends the first information, and the second time domain position is a time domain position at which the user device sends the wake-up information.

For example, an end timepoint of the first information is t, i.e., the end timepoint of the first time domain position is t. The second time domain position is determined as [t+T1, t+T2], where T2 is greater than T1, and T2 and T1 are fixed values, or are values agreed by the protocol, or are values configured by a second base station.

In some possible embodiments, the method further includes determining a second time domain position based on a first time domain position and a period of the first information, where the first time domain position is a time domain position at which the first network device sends the first information, and the second time domain position is a time domain position at which the user device sends the wake-up information.

For example, the period of the first information is T, i.e., the period for the first network device to send the first information is T. A time domain length of the second time domain position is determined as T0, and a start position of the second time domain position is 0.5T after an end position of the first time domain position. Thereby, an end timepoint of the first information in a certain period is t, then the corresponding second time domain position is [t+0.5T, t+0.5T+T0], and the second time domain position in subsequent periods is [t+1.5T, t+1.5T+T0], [t+2.5T, t+2.5T+T0] respectively, and so on.

In some possible embodiments, the frequency domain position of the wake-up information is determined based on the frequency domain position at which the first network device sends the first information.

The embodiments of the present disclosure provide a network device wake-up method performed by a user device. FIG. 4 is a flowchart of a network device wake-up method illustrated according to an exemplary embodiment. As shown in FIG. 4, the method includes step S401, and the specifics are as follows.

At S401, wake-up information is sent to a first network device in an energy-saving state, where the wake-up information indicates the first network device to terminate an energy-saving state and start a working state.

In some possible embodiments, before S401, the method further includes S400, where first information sent by the first network device is received, and the first information indicates that the first network device is in the energy-saving state.

In some possible embodiments, the first information includes a cell identification and a synchronization signal.

In some possible embodiments, receiving the first information sent by the first network device includes receiving second information sent by the first network device, where the second information includes the first information, the cell identification and the synchronization signal.

In some possible embodiments, the first information sent by the first network device through broadcasting is received.

In some possible embodiments, the first network device sends the first information through periodical broadcasting. In some possible embodiments, the energy-saving state is an energy-saving state of restricting a downlink transmission. In some embodiments, restricting the downlink transmission includes restricting downlink broadcasting. For example, restricting the downlink transmission includes not sending one or two of the following: common downlink control information, a system message and a paging message. As another example, restricting the downlink transmission includes not sending the common downlink control information, the system message and the paging message.

In the embodiments of the present disclosure, the first information may be two different kinds of information, specifically, the first case and the second case are as described in the foregoing embodiments, and will not be repeated herein.

The embodiments of the present disclosure are applicable to application scenarios of instant wake-up, i.e., the user device sends the wake-up information to the first network device as soon as the user device receives the first information from a certain first network device in the energy-saving state.

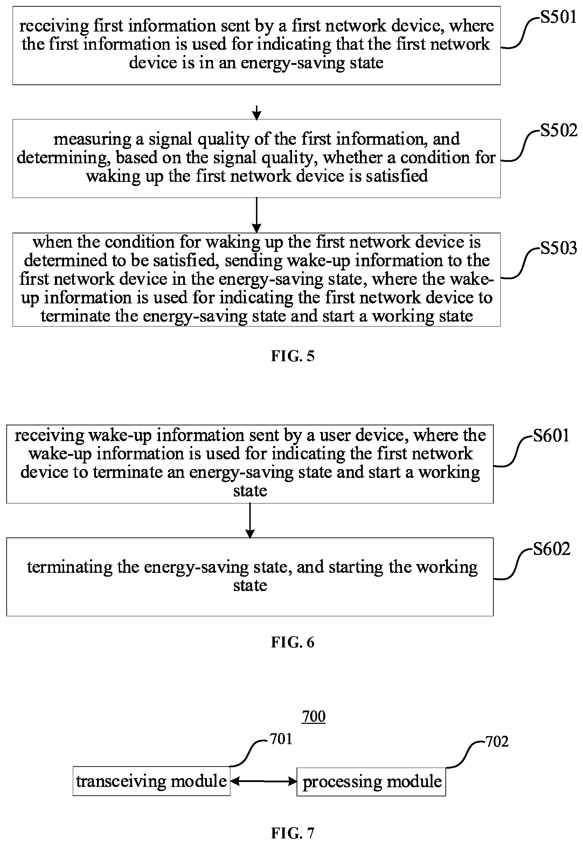

The embodiments of the present disclosure provide a network device wake-up method performed by a user device. FIG. 5 is a flowchart of a network device wake-up method illustrated according to an exemplary embodiment. As shown in FIG. 5, the method includes steps S501~S503, and the specifics are as follows.

At 501, first information sent by a first network device is received, where the first information indicates that the first network device is in an energy-saving state.

In some possible embodiments, the first information includes a cell identification and a synchronization signal.

In some possible embodiments, receiving the first information sent by the first network device includes receiving second information sent by the first network device, where the second information includes the first information, the cell identification and the synchronization signal.

In some possible embodiments, the first information sent by the first network device through broadcasting is received.

In some possible embodiments, the first network device sends the first information through periodical broadcasting.

In some possible embodiments, the energy-saving state is an energy-saving state of restricting a downlink transmission. In some embodiments, restricting the downlink transmission includes restricting downlink broadcasting. For example, restricting the downlink transmission includes not sending one or two of the following: common downlink control information, a system message and a paging message. As another example, restricting the downlink transmission includes not sending the common downlink control information, the system message and the paging message.

At S502, a signal quality of the first information is measured, and whether a condition for waking up the first network device is satisfied is determined based on the signal quality.

In some possible embodiments, determining, based on the signal quality, whether the condition for waking up the first network device is satisfied includes the following three manners.

In manner I, when the signal quality is greater than a first threshold, it is determined that the condition for waking up the first network device is satisfied.

In manner II, when the signal quality is better than a downlink signal quality of a second network device, it is determined that the condition for waking up the first network device is satisfied.

In manner III, when a difference between the signal quality and the downlink signal quality of the second network device is greater than a second threshold, where the signal quality is better than the downlink signal quality of the second network device, it is determined that the condition for waking up the first network device is satisfied.

At S503, wake-up information is sent, when the condition for waking up the first network device is determined to be satisfied, to the first network device in the energy-saving state, where the wake-up information indicates the first network device to terminate the energy-saving state and start a working state.

In the embodiments of the present disclosure, the first information may be two different kinds of information, specifically, the first case and the second case are as described in the foregoing embodiments, and will not be repeated herein.

The embodiments of the present disclosure are applicable to application scenarios of conditional wake-up, i.e., after the user device receives the first information from a certain first network device in the energy-saving state, the user device decides, based on the first information, whether or not to send the wake-up information to the first network device.

The embodiments of the present disclosure provide a network device wake-up method performed by a first network device. FIG. 6 is a flowchart of a network device wake-up method illustrated according to an exemplary embodiment. As shown in FIG. 6, the method includes steps S601~S602, and the specifics are as follows.

At S601, wake-up information sent by a user device is received, where the wake-up information indicates the first network device to terminate an energy-saving state and start a working state.

At S602, the energy-saving state is terminated, and the working state is started.

The energy-saving state is a state of restricting a downlink transmission. The working state is a state of not restricting the downlink transmission.

In some possible embodiments, restricting the downlink transmission in the energy-saving state includes not sending common downlink control information, a system message and a paging message. The working state includes sending the common downlink control information, the system message and the paging message.

In some possible embodiments, before S601, the method further includes sending first information, where the first information indicates that the first network device is in the energy-saving state.

In some possible embodiments, the first information includes a cell identification and a synchronization signal.

In some possible embodiments, sending the first information includes sending second information, where the second information includes the first information, the cell identification and the synchronization signal.

In some possible embodiments, the network device sends the first information through broadcasting.

In some possible embodiments, the network device sends the first information through periodical broadcasting.

In some possible embodiments, the energy-saving state is an energy-saving state of restricting a downlink transmission. For example, restricting the downlink transmission includes not sending one or two of the following: the common downlink control information, the system message and the paging message. As another example, restricting the downlink transmission includes not sending the common downlink control information, the system message and the paging message.

The first information is an SSB, and a PBCH in the SSB includes an information field. The information field includes at least one bit. The information field indicates that the first network device does not send the common downlink control information, the system message and the paging message.

In the embodiments of the present disclosure, the first information may be two different kinds of information, specifically, the first case and the second case are as described in the foregoing embodiments, and will not be repeated herein.

Based on the same idea as the above method embodiments, the embodiments of the present disclosure further provide a communication device. The communication device may have the function of the user device 102 in the above method embodiments, and may be configured to perform the steps executed by the user device 102 provided in the above embodiments. The function may be implemented by hardware, or may be implemented by software or hardware executing corresponding software. The hardware or software includes one or more modules corresponding to the above-described functions.

In a possible implementation, the communication device 700 as shown in FIG. 7 may serve as the user device 102 involved in the above method embodiments, and perform the steps executed by the user device 102 in the above method embodiments.

The communication device 700 includes a transceiving module 701 and a processing module 702.

The transceiving module 701 is configured to send wake-up information to a first network device in an energy-saving state, where the wake-up information indicates the first network device to terminate the energy-saving state and start a working state.

In some possible embodiments, the energy-saving state is an energy-saving state of restricting a downlink transmission, and the working state is a state of not restricting the downlink transmission.

In some possible embodiments, the restricting the downlink transmission at least includes not sending at least one of the following: common downlink control information, a system message and a paging message.

In some possible embodiments, the first information is an SSB, and a PBCH in the SSB includes an information field, the information field includes at least one bit, and the information field indicates that the first network device does not send common downlink control information, a system message and a paging message.

In some possible embodiments, the information field in the PBCH is in a reservation information field in the PBCH; and the reservation information field is a reservation information field in a higher layer broadcast channel, or a reservation information field in a physical layer.

In some possible embodiments, a resource configuration of the wake-up information is a PRACH configuration predefined by a protocol; and the PRACH configuration includes at least one of the following: a period, a time domain resource, a preamble sequence, and a preamble sequence format.

In some possible embodiments, a frequency domain position in the PRACH configuration is determined based on a frequency domain position at which the first network device sends an SSB.

In some possible embodiments, a frequency domain position in the PRACH configuration is the same as a frequency domain position at which the first network device sends an SSB.

In some possible embodiments, a set frequency domain interval is present between a frequency domain position in the PRACH configuration and a frequency domain position at which the first network device sends an SSB.

In some possible embodiments, the first information includes a cell identification; and the processing module 702 is configured to determine, based on the cell identification, a resource configuration of the wake-up information.

In some possible embodiments, the processing module 702 is further configured to determine based on the cell identification, from a plurality of PRACH configurations predefined by a protocol, a PRACH configuration as the resource configuration of the wake-up information.

In some possible embodiments, the transceiving module 701 is further configured to receive a PSS and an SSS sent by the first network device.

In some possible embodiments, a frequency domain position of the PSS is the same as a frequency domain position of the SSS, and an interval between a time domain position of the PSS and a time domain position of the SSS is a set interval.

In some possible embodiments, the set interval is one symbol.

In some possible embodiments, a frequency domain position of the first information is on a synchronization raster.

In some possible embodiments, the processing module 702 is further configured to determine a second time domain position based on a first time domain position, where the first time domain position is a time domain position at which the first network device sends the first information, and the second time domain position is a time domain position at which the user device sends the wake-up information.

In some possible embodiments, the processing module 702 is configured to determine, based on a frequency domain position at which the first network device sends the first information, a frequency domain position of the wake-up information.

In some possible embodiments, a resource configuration of the wake-up information is configured by a second network device, and the second network device is a service network device of the user device.

In some possible embodiments, the processing module 702 is further configured to measure a signal quality of the first information, and the transceiving module 701 is further configured to send the wake-up information to the first network device in the energy-saving state when the transceiving module 701 determines, based on the signal quality, that a condition for waking up the first network device is satisfied.

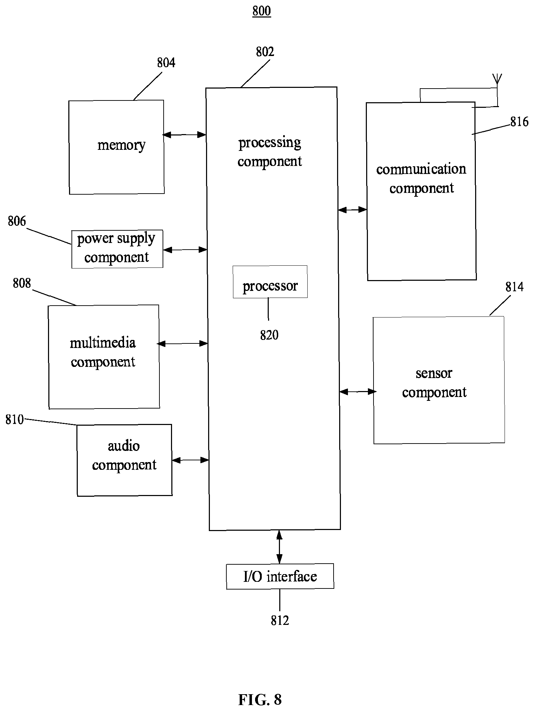

When the communication device is a user device 102, its structure may also be shown in FIG. 8. Referring to FIG. 8, FIG. 8 is a block diagram of a network device wake-up apparatus 800 illustrated according to an exemplary embodiment. For example, the apparatus 800 may be a cell phone, a computer, a digital broadcast terminal, a message transceiving device, a game console, a tablet device, a medical device, a fitness device, or a personal digital assistant.

Referring to FIG. 8, the apparatus 800 may include one or more of the following components: a processing component 802, a memory 804, a power supply component 806, a multimedia component 808, an audio component 810, an input/output (I/O) interface 812, a sensor component 814, a communication component 816.

The processing component 802 generally controls an overall operation of the apparatus 800, such as operations associated with display, telephone calls, data communication, camera operations, and recording operations. The processing component 802 may include one or more processors 820 to execute an instruction, thereby completing all or a part of the steps of the methods described above. In addition, the processing component 802 may include one or more modules that facilitate interaction between the processing component 802 and other components. For example, the processing component 802 may include a multimedia module to facilitate interaction between the multimedia component 808 and the processing component 802.

The memory 804 is configured to store various types of data to support operations at the apparatus 800. Examples of such data include the following for any application program or method operated on the apparatus 800: instructions, contact data, phonebook data, messages, pictures, videos, etc. The memory 804 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk, or a CD-ROM.

The power supply component 806 supplies power to various components of the apparatus 800. The power supply component 806 may include a power supply management system, one or more power supplies, and other components associated with generating, managing and distributing power for the apparatus 800.

The multimedia component 808 includes a screen that provides an output interface between the apparatus 800 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense the boundaries of the touch or swipe action, but also detect the duration and pressure associated with the touch or swipe operation. In some embodiments, the multimedia component 808 includes a front-facing camera and/or a rear-facing camera. The front-facing camera and/or the rear-facing camera may receive external multimedia data when the apparatus 800 is in an operating mode, such as a shooting mode or a video mode. Each of the front-facing camera and the rear-facing camera may be a fixed optical lens system or have a focal length and optical zoom capability.

The audio component 810 is configured to output and/or input audio signals. For example, the audio component 810 includes a microphone (MIC). When the apparatus 800 is in an operating mode, such as a calling mode, a recording mode and a voice recognition mode, the MIC is configured to receive external audio signals. The received audio signals may be further stored in the memory 804 or sent via the communication component 816. In some embodiments, the audio component 810 further includes a speaker for outputting the audio signals.

The I/O interface 812 provides an interface between the processing component 802 and a peripheral interface module. The peripheral interface module described above may be a keypad, a click wheel, a button, etc. These buttons may include, but are not limited to, a home button, a volume button, a start button, and a lock button.

The sensor component 814 includes one or more sensors configured to provide status assessment of various aspects of the apparatus 800. For example, the sensor component 814 may detect an open/closed state of the apparatus 800, relative positioning of the components, for example, the components are the display and small keypad of the apparatus 800; the sensor component 814 may also detect a change in the position of the apparatus 800 or a change in the position of one component of the apparatus 800, the presence or absence of contact between the user and the apparatus 800, the orientation or acceleration/deceleration of the apparatus 800, and temperature changes of the apparatus 800. The sensor component 814 may include a proximity sensor that is configured to detect the presence of nearby objects in the absence of any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate the communication between the apparatus 800 and other devices by wired or wireless means. The apparatus 800 may access a wireless network based on a communication standard, such as WiFi, 4G, 5G, or a combination thereof. In an exemplary embodiment, the communication component 816 receives broadcast signals or broadcast related information from an external broadcast management system via a broadcast channel. In an exemplary embodiment, the communication component 816 further includes a near-field communication (NFC) module to facilitate short-range communication. For example, the NFC module may be implemented based on the radio frequency identification (RFID) technology, the infrared data association (IrDA) technology, the ultra-wideband (UWB) technology, the Bluetooth (BT) technology, and the like.

In an exemplary embodiment, the apparatus 800 may be implemented by one or more of the following: an application-specific integrated circuit (ASIC), a digital signal processor (DSP), a digital signal processing device (DSPD), a programmable logic device (PLD), a field-programmable gate array (FPGA), a controller, a microcontroller, a microprocessor, or other electronic elements, for performing the above methods.

In an exemplary embodiment, a non-transitory computer-readable storage medium including an instruction is also provided, such as the memory 804 including an instruction. The instruction described above is capable of being executed by the processor 820 of the apparatus 800 to complete the above methods. For example, the non-transitory computer-readable storage medium may be an ROM, a random access memory (RAM), a CD-ROM, a magnetic tape, a floppy disk, or an optical data storage device.

Based on the same idea as the above method embodiments, the embodiments of the present disclosure further provide a communication device. The communication device may have the function of the network device 101 in the above method embodiments, and may be configured to perform the steps executed by the network device 101 provided in the above embodiments. The function may be implemented by hardware, or may be implemented by software or hardware executing corresponding software. The hardware or software includes one or more modules corresponding to the above-described functions.

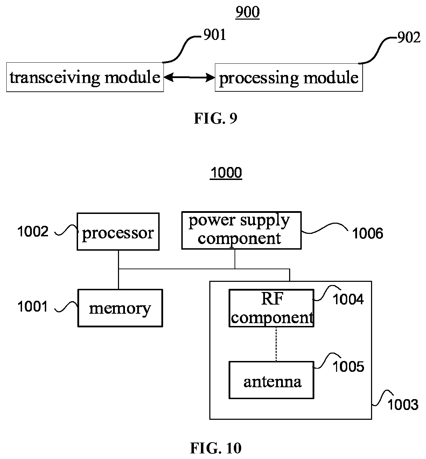

In a possible implementation, the communication device 900 as shown in FIG. 9 may serve as the network device 101 involved in the above method embodiments, and perform the steps executed by the network device 101 in the above method embodiments.

The communication device 900 includes a transceiving module 901 and a processing module 902.

The transceiving module 901 is configured to receive wake-up information sent by a user device, where the wake-up information indicates a first network device to terminate an energy-saving state and start a working state.

The processing module 902 is configured to terminate the energy-saving state and start the working state.

In some possible embodiments, the energy-saving state is a state of restricting a downlink transmission, and the working state is a state of not restricting the downlink transmission.

In some possible embodiments, the restricting the downlink transmission includes not sending at least one of the following: common downlink control information, a system message and a paging message.

In some possible embodiments, the transceiving module 901 is further configured to send first information, where the first information indicates that the first network device is in the energy-saving state.

In some possible embodiments, the first information is an SSB, and a PBCH in the SSB includes an information field, the information field includes at least one bit, and the information field indicates that the first network device does not send common downlink control information, a system message and a paging message.

In some possible embodiments, a resource configuration of the wake-up information is a PRACH configuration predefined by a protocol; and the PRACH configuration includes at least one of the following: a period, a time domain resource, a preamble sequence, and a preamble sequence format.

In some possible embodiments, a frequency domain position in the PRACH configuration is determined based on a frequency domain position at which the network device sends an SSB.

In some possible embodiments, a frequency domain position in the PRACH configuration is the same as a frequency domain position at which the first network device sends an SSB.

In some possible embodiments, the first information includes a cell identification; and the processing module 902 is configured to determine, based on the cell identification, a resource configuration of the wake-up information.

In some possible embodiments, the processing module 902 is further configured to determine based on the cell identification, from a plurality of PRACH configurations predefined by a protocol, a PRACH configuration as the resource configuration of the wake-up information.

In some possible embodiments, the transceiving module 901 is configured to send a PSS and an SSS.

In some possible embodiments, a frequency domain position of the PSS is the same as a frequency domain position of the SSS, and an interval between a time domain position of the PSS and a time domain position of the SSS is a set interval.

In some possible embodiments, a frequency domain position of the first information is on a synchronization raster.

In some possible embodiments, the processing module 902 is further configured to determine a second time domain position based on a first time domain position, where the first time domain position is a time domain position at which the first network device sends the first information, and the second time domain position is a time domain position at which the user device sends the wake-up information.

In some possible embodiments, the processing module 902 is further configured to determine, based on a frequency domain position at which the network device sends the first information, a frequency domain position of the wake-up information.

When the communication device is a network device 101, its structure may also be shown in FIG. 10. As shown in FIG. 10, the device 1000 includes a memory 1001, a processor 1002, a transceiving component 1003, and a power supply component 1006. The memory 1001 is coupled to the processor 1002, and may be configured to store programs and data necessary for the communication device 1000 to implement various functions. The processor 1002 is configured to support the communication device 1000 in performing the corresponding function in the above methods, and the function may be implemented by invoking a program stored in the memory 1001. The transceiving component 1003 may be a wireless transceiver that may be configured to support the communication device 1000 in performing, via a wireless air interface, receiving signaling and/or data, and sending signaling and/or data. The transceiving component 1003 may also be referred to as a transceiving unit or a communication unit. The transceiving component 1003 may include a radio frequency (RF) component 1004 and one or more antennas 1005, where the RF component 1004 may be a remote radio unit (RRU), which may be specifically configured for transmission of RF signals and conversion between RF signals and baseband signals. The one or more antennas 1005 may be specifically configured to perform radiation and reception of RF signals.

When the communication device 1000 needs to send data, the processor 1002, after performing baseband processing on the data to be sent, may output a baseband signal to an RF unit, and the RF unit, after performing RF processing on the baseband signal, sends the RF signal in the form of electromagnetic waves through the antenna. When there is data sent to the communication device 1000, the RF unit receives an RF signal through the antenna, converts the RF signal to a baseband signal, and outputs the baseband signal to the processor 1002, and the processor 1002 converts the baseband signal to data and processes the data.

In an exemplary embodiment, a non-transitory computer-readable storage medium including an instruction is also provided, such as the memory including an instruction. The instruction described above is capable of being executed by the processor 1002 of the device 1000 to complete the above methods. For example, the non-transitory computer-readable storage medium may be an ROM, a random access memory (RAM), a CD-ROM, a magnetic tape, a floppy disk, or an optical data storage device.

After considering the specification and practicing the invention disclosed herein, those skilled in the art will easily come up with other implementation solutions of the embodiments of the present disclosure. The present application is intended to cover any variations, uses or adaptive changes of the embodiments of the present disclosure, and the variations, uses or adaptive changes follow the general principles of the embodiments of the present disclosure and include common knowledge or commonly used technical means in the art that is not disclosed in the present disclosure. The specification and embodiments are only considered to be exemplary, and the true scope and spirit of the embodiments of the present disclosure are indicated by the following claims.

It should be understood that the embodiments of the present disclosure are not limited to the precise structure which has been described above and illustrated in the accompanying drawings, and that various modifications and alterations may be made without departing from the scope of the embodiments of the present disclosure. The scope of the embodiments of the present disclosure is limited only by the appended claims.

### INDUSTRIAL APPLICABILITY

The network device is woken up by means of the user device sending the wake-up information. Thus, the network device is enabled to achieve energy saving during a time period when the energy saving is required, and is enabled to smoothly achieve state switching during a time period when normal working is required.

## Claims

1. A network device wake-up method, performed by a user device, comprising:
sending wake-up information to a first network device in an energy-saving state, wherein the wake-up information indicates the first network device to terminate the energy-saving state and start a working state.

2. The method according to claim 1, wherein the energy-saving state is an energy-saving state of restricting a downlink transmission, and the working state is a state of not restricting the downlink transmission.

3. The method according to claim 2, wherein the restricting the downlink transmission at least comprises not sending at least one of: common downlink control information, a system message and a paging message.

4. The method according to any one of claims 1 to 3, wherein the method further comprises:
receiving first information sent by the first network device, wherein the first information indicates that the first network device is in the energy-saving state.

5. The method according to claim 4, wherein the first information is a synchronization signal block (SSB), and a physical broadcast channel (PBCH) in the SSB comprises an information field, the information field comprises at least one bit, and the information field indicates that the first network device does not send common downlink control information, a system message and a paging message.

6. The method according to claim 5, wherein the information field is in a reservation information field in the PBCH; and the reservation information field is a reservation information field in a higher layer broadcast channel, or a reservation information field in a physical layer.

7. The method according to any one of claims 1 to 6, wherein a resource configuration of the wake-up information is a physical random access channel (PRACH) configuration predefined by a protocol; and
the PRACH configuration comprises at least one of: a period, a time domain resource, a preamble sequence, and a preamble sequence format.

8. The method according to claim 7, wherein a frequency domain position in the PRACH configuration is determined based on a frequency domain position at which the first network device sends an SSB.

9. The method according to claim 7 or 8, wherein a frequency domain position in the PRACH configuration is the same as a frequency domain position at which the first network device sends an SSB.

10. The method according to claim 7 or 8, wherein a set frequency domain interval is present between a frequency domain position in the PRACH configuration and a frequency domain position at which the first network device sends an SSB.

11. The method according to any one of claims 4 to 6, wherein the first information comprises a cell identification; and
the method further comprises: determining, based on the cell identification, a resource configuration of the wake-up information.

12. The method according to claim 11, wherein the determining, based on the cell identification, the resource configuration of the wake-up information comprises:
determining based on the cell identification, from a plurality of PRACH configurations predefined by a protocol, a PRACH configuration as the resource configuration of the wake-up information.

13. The method according to any one of claims 4 to 6, wherein the receiving the first information sent by the first network device comprises:
receiving a primary synchronization signal (PSS) and a secondary synchronization signal (SSS) sent by the first network device.

14. The method according to claim 13, wherein a frequency domain position of the PSS is the same as a frequency domain position of the SSS, and an interval between a time domain position of the PSS and a time domain position of the SSS is a set interval.

15. The method according to claim 14, wherein the set interval is one symbol.

16. The method according to claim 13, wherein a frequency domain position of the first information is on a synchronization raster.

17. The method according to claim 14, wherein the method further comprises:
determining a second time domain position based on a first time domain position, wherein the first time domain position is a time domain position at which the first network device sends the first information, and the second time domain position is a time domain position at which the user device sends the wake-up information.

18. The method according to claim 13, wherein the method further comprises:
determining, based on a frequency domain position at which the first network device sends the first information, a frequency domain position of the wake-up information.

19. The method according to any one of claims 1 to 18, wherein a resource configuration of the wake-up information is configured by a second network device, and the second network device is a service network device of the user device.

20. The method according to any one of claims 4 to 19, wherein the sending the wake-up information to the first network device in the energy-saving state comprises:
measuring a signal quality of the first information, and sending the wake-up information to the first network device when a condition for waking up the first network device in the energy-saving state is determined, based on the signal quality, to be satisfied.

21. A network device wake-up method, performed by a first network device, comprising:
receiving wake-up information sent by a user device, wherein the wake-up information indicates the first network device to terminate an energy-saving state and start a working state; and
terminating the energy-saving state, and starting the working state.

22. The method according to claim 21, wherein the energy-saving state is a state of restricting a downlink transmission, and the working state is a state of not restricting the downlink transmission.

23. The method according to claim 22, wherein the restricting the downlink transmission comprises not sending at least one of: common downlink control information, a system message and a paging message.

24. The method according to any one of claims 21 to 23, wherein the method further comprises:
sending first information, wherein the first information indicates that the first network device is in the energy-saving state.

25. The method according to claim 24, wherein the first information is a synchronization signal block (SSB), and a physical broadcast channel (PBCH) in the SSB comprises an information field, the information field comprises at least one bit, and the information field indicates that the first network device does not send common downlink control information, a system message and a paging message.

26. The method according to any one of claims 21 to 25, wherein a resource configuration of the wake-up information is a physical random access channel (PRACH) configuration predefined by a protocol; and
the PRACH configuration comprises at least one of: a period, a time domain resource, a preamble sequence, and a preamble sequence format.

27. The method according to claim 26, wherein a frequency domain position in the PRACH configuration is determined based on a frequency domain position at which the network device sends an SSB.

28. The method according to claim 26 or 27, wherein a frequency domain position in the PRACH configuration is the same as a frequency domain position at which the first network device sends an SSB.

29. The method according to any one of claims 24 to 28, wherein the first information comprises a cell identification; and
the method further comprises: determining, based on the cell identification, a resource configuration of the wake-up information.

30. The method according to claim 29, wherein the determining, based on the cell identification, the resource configuration of the wake-up information comprises:
determining based on the cell identification, from a plurality of PRACH configurations predefined by a protocol, a PRACH configuration as the resource configuration of the wake-up information.

31. The method according to claim 24, wherein the sending the first information comprises:
sending a primary synchronization signal (PSS) and a secondary synchronization signal (SSS).

32. The method according to claim 31, wherein a frequency domain position of the PSS is the same as a frequency domain position of the SSS, and an interval between a time domain position of the PSS and a time domain position of the SSS is a set interval.

33. The method according to claim 31, wherein a frequency domain position of the first information is on a synchronization raster.

34. The method according to claim 31, wherein the method further comprises:
determining a second time domain position based on a first time domain position, wherein the first time domain position is a time domain position at which the first network device sends the first information, and the second time domain position is a time domain position at which the user device sends the wake-up information.

35. The method according to claim 34, wherein the method further comprises:
determining, based on a frequency domain position at which the first network device sends the first information, a frequency domain position of the wake-up information.

36. A network device wake-up apparatus, configured in a user device, comprising:
a transceiving module, configured to send wake-up information to a first network device in an energy-saving state, wherein the wake-up information indicates the first network device to terminate the energy-saving state and start a working state.

37. A network device wake-up apparatus, configured in a network device, comprising:
a transceiving module, configured to receive wake-up information sent by a user device, wherein the wake-up information indicates a first network device to terminate an energy-saving state and start a working state; and
a processing module, configured to terminate the energy-saving state and start the working state.

38. An electronic device, comprising a processor and a memory, wherein
the memory is configured to store a computer program; and
the processor is configured to execute the computer program, thereby implementing the method according to any one of claims 1 to 20.

39. An electronic device, comprising a processor and a memory, wherein
the memory is configured to store a computer program; and
the processor is configured to execute the computer program, thereby implementing the method according to any one of claims 21 to 35.

40. A computer-readable storage medium, wherein the computer-readable storage medium stores an instruction, and the instruction, when invoked and executed on a computer, causes the computer to perform the method according to any one of claims 1 to 20.

41. A computer-readable storage medium, wherein the computer-readable storage medium stores an instruction, and the instruction, when invoked and executed on a computer, causes the computer to perform the method according to any one of claims 21 to 35.
